# EUROPÄISCHE PATENTSCHRIFT

(11) **EP 4 288 180 B1**
(45) Veröffentlichungstag und Bekanntmachung des Hinweises auf die Patenterteilung: **06.08.2025**
(21) Anmeldenummer: 22708780.6
(22) Anmeldetag: 02.02.2022
(51) Int. Cl.: B01D 46/00, B01D 46/10, B01D 46/52, B60H 3/06

(54) **FILTERELEMENT FÜR EINE LUFTFILTEREINRICHTUNG EINES KRAFTWAGENS UND LUFTFILTEREINRICHTUNG**
FILTER ELEMENT FOR AN AIR-FILTER DEVICE OF A MOTOR VEHICLE, AND AIR-FILTER DEVICE
ÉLÉMENT DE FILTRE POUR UN DISPOSITIF DE FILTRE À AIR D'UN VÉHICULE À MOTEUR, ET DISPOSITIF DE FILTRE À AIR

(30) Priorität: 02.02.2021 DE 102021000515
(43) Veröffentlichungstag der Anmeldung: 13.12.2023
(73) Patentinhaber: Daimler Truck AG, 70771 Leinfelden-Echterdingen (DE)
(72) Erfinder: SCHUHMACHER, Eric, 70565 Stuttgart (DE)
(74) Vertreter: JENSEN & SON
(86) Internationale Anmeldenummer: PCT/EP2022/052375
(87) Internationale Veröffentlichungsnummer: WO 2022/167433

(56) Entgegenhaltungen:
- EP-A1- 2 769 758
- CN-A- 109 529 483
- DE-A1- 10 245 427
- DE-U1- 202005 011 078
- DE-U1- 202006 004 420
- FR-A1- 2 815 699

## Beschreibung

Die Erfindung betrifft ein Filterelement für eine Luftfiltereinrichtung eines Kraftwagens, mit einem Rahmen, welcher ein Filtermaterial des Filterelements zumindest bereichsweise umgibt. Der Rahmen umfasst eine Frontwand, welche sich im Wesentlichen senkrecht zu einer Einführrichtung erstreckt. In die Einführrichtung ist das Filterelement in einen Aufnahmeraum eines Gehäuses der Luftfiltereinrichtung einführbar. An einer Frontseite der Frontwand ist wenigstens ein Befestigungselement angeordnet. An dem Befestigungselement ist ein zum Verschließen des Aufnahmeraums ausgebildeter Deckel der Luftfiltereinrichtung festlegbar. Des Weiteren betrifft die Erfindung eine Luftfiltereinrichtung mit einem solchen Filterelement.

Die DE 20 2005 011 078 U1 beschreibt ein Filterelement mit einem Faltenpack, der umlaufend mit einem streifenförmigen Rahmenelement versehen ist. An einer einem Verschlusselement zugewandten stirnseitigen Randfläche des Filterelements weist das Filterelement ein ebenes Flächenelement auf. Zwei sich gegenüberliegende Überstände des Flächenelements sind mit Durchgrifforganen ausgebildet. Rastelemente des Verschlusselements können durch die Durchgrifforgane des Flächenelements und durch mit diesen deckungsgleiche Ausnehmungen an einer Zugangsöffnung einer Filteraufnahme durchgesteckt werden. Anschließend werden die Rastelemente an der Zugangsöffnung der Filteraufnahme festgelegt. Auf diese Weise wird das Verschlusselement an der Filteraufnahme abdichtend angeordnet. Von einem der Überstände kann einstückig eine Lasche wegstehen, die eine Filter-Entnahmehilfe bildet.

Die DE 198 04 452 A1 zeigt einen Luftfilter für eine Klimaanlage eines Kraftfahrzeugs mit einem Filtergehäuse mit Einschuböffnung für einen Filtereinsatz, wobei die Öffnung durch einen Deckel verschließbar ist, der fest mit dem Filtereinsatz verbunden ist. Der Deckel überragt an seiner äußeren Seite, mit der er mit dem Gehäuse in Anlage kommt, die Einschuböffnung. Die nach innen - in Einschubrichtung - weisende Seite des Deckels entspricht in ihrer Ausdehnung der Weite der Einschuböffnung und hat an einer Seite eine starre Verriegelungsnase, die einen entsprechenden Rand des Filtergehäuses im verschlossenen Zustand hintergreift. Für den korrekten Sitz des Deckels in der verschlossenen Einschuböffnung sorgt eine ungefähr mittig zwischen äußerer und innerer Seite des Deckels umlaufende elastisch verformbare Dichtung.

Die DE 20 2005 005 067 U1 zeigt ein Filterelement zum Einsatz in eine Filteraufnahme, wobei die für den Einsatz des Filterelements in der Filteraufnahme vorgesehene Zugangsöffnung durch ein separates Verschlusselement verschließbar ist. Zu diesem Zweck stehen an dem Verschlusselement hakenförmige, miteinander fluchtende Befestigungselemente ab, denen entsprechende Ausnehmungen an der Filteraufnahme zugeordnet sind. Zur Abdichtung zwischen dem Verschlusselement und der Filteraufnahme weist das Filterelement an seiner dem Verschlusselement zugewandten Stirnseite ein flächiges Abdichtelement auf, das allseits über den Rand der Stirnseite übersteht, wobei in den Überständen Durchgriffe zum Durchstecken der Befestigungselemente ausgebildet sind.

Die DE 10 2015 003 297 A1 beschreibt eine Luftfiltereinrichtung für einen Kraftwagen umfassend ein Gehäuse, in dem ein Filterelement aufnehmbar ist, sowie einen Deckel. Das Filterelement weist wenigstens eine Rasteinrichtung in Form zweier gegenüberliegenden und gegenläufig bewegbaren Haltelaschen oder Ösen auf, die, sobald das Filterelement in das Gehäuse eingesetzt ist, und der Deckel darauf aufgesetzt ist, mit korrespondierenden Haltenasen am Gehäuse und am Deckel verrastet werden können, wodurch die drei zusammenwirkenden Teile gegeneinander abgedichtet werden.

Die DE 10 2017 007 497 A1 zeigt einen Luftfilter für einen Kraftwagen, bei dem wiederum ein Filterelement durch eine Einführöffnung in das Gehäuse des Luftfilters eingesetzt wird, und die Einführöffnung durch ein Deckelelement dichtend verschließbar ist. Das Filterelement weist wenigstens ein Halteelement mit einem Befestigungselement auf, wobei das Halteelement beim Einsetzen des Filterelements im Gehäuse hinterrastet, wobei sich dann das mit dem Halteelement verbundene Befestigungselement in einer Position befindet, in der eine am Deckelelement zugeordnete Riegelstrebe durch eine Durchtrittsöffnung im Befestigungselement hindurchgeführt und verdreht werden kann, wodurch der Deckel mit dem Gehäuse dichtend verbunden wird.

Die DE 10 2007 018 215 A1 beschreibt einen Luftfilter für eine Klimaanlage eines Kraftfahrzeugs, bei welchem ein Rahmen um ein gefaltetes Filtermedium umläuft. Von einer Wand des Rahmens stehen zwei Aufnahmen ab, in welche Rastmittel eingeführt werden können. Die Rastmittel sind an einem Deckel angeordnet, mit welchem ein Gehäuse verschließbar ist, in welchem der Rahmen mit dem gefalteten Filtermedium aufgenommen ist. Hierbei ist ein Dichtelement, welches bei mittels des Deckels verschlossenem Gehäuse am Rand des Gehäuses anliegt, einstückig mit einer Verbindungsplatte des Deckels ausgebildet.

Bei einem derartigen Luftfilter erweist es sich als schwierig, den Deckel so zu handhaben, dass die Rastmittel in die Aufnahmen einrasten können. Dies liegt unter anderem daran, dass eine definierte Einbaulage des Rahmens in dem Gehäuse nicht vorgegeben ist.

Zudem müssen die beiden an dem Deckel angeordneten Rastmittel genau so ausgerichtet werden, dass sie in die Aufnahmen eingeführt werden können. Dies gestaltet sich insbesondere dann schwierig, wenn die Aufnahmen für eine mit der Montage des Deckels befasste Person nicht gut einsehbar sind.

Des Weiteren beschreibt die DE 10 2015 004 645 A1 ein Filterelement zum Filtern von Verbrennungsluft, welche einer Brennkraftmaschine eines Kraftfahrzeugs zugeführt wird. Das Filterelement weist einen Filtermediumkörper auf, welcher an einem innenliegenden Trägerkörper in Form eines Stützgerüsts abgestützt und gehalten ist. An axialen Stirnseiten des Trägerkörpers befinden sich Endscheiben. Über jeweilige Verbindungsteile sind zwei laschenförmige Bauteile, welche jeweilige Verrastungselemente aufweisen, mit einer der Endscheiben verbunden. Die Bauteile mit den jeweiligen Verrastungselementen sind über die Verbindungsteile einteilig mit der Endscheibe ausgebildet. Des Weiteren stehen die Bauteile in seitlicher Richtung von dem Filterelement ab. Die Verrastungselemente verrasten in einer Einbaulage des Filterelements mit Gegenrastelementen, welche an einem Filtergehäuse angeordnet sind. Mittels eines auf das Filtergehäuse aufgesetzten Deckels werden die Verrastungselemente in einer Verrastungsposition gesichert.

Als nachteilig ist hierbei der Umstand anzusehen, dass die seitlich abstehenden Bauteile mit den Verrastungselementen vergleichsweise viel Bauraum innerhalb des Filtergehäuses beanspruchen, welcher somit nicht für das Filtern der zu filternden Luft genutzt werden kann oder zur Verfügung steht.

Darüber hinaus kann bei dieser Luftfiltereinrichtung der Deckel auch dann an dem Filtergehäuse angebracht werden, wenn sich kein Filterelement in dem Filtergehäuse befindet. Auch dies ist nachteilig.

Aufgabe der vorliegenden Erfindung ist es, ein Filterelement der eingangs genannten Art zu schaffen, welches das Verschließen des Aufnahmeraums mittels des Deckels vereinfacht, und eine Luftfiltereinrichtung mit einem solchen Filterelement anzugeben.

Diese Aufgabe wird durch ein Filterelement mit den Merkmalen des Patentanspruchs 1 und durch eine Luftfiltereinrichtung mit den Merkmalen des Patentanspruchs 6 gelöst. Vorteilhafte Ausgestaltungen mit zweckmäßigen Weiterbildungen der Erfindung sind in den abhängigen Patentansprüchen und in der nachfolgenden Beschreibung angegeben.

Das erfindungsgemäße Filterelement für eine Luftfiltereinrichtung eines Kraftwagens weist einen Rahmen auf, welcher ein Filtermaterial des Filterelements zumindest bereichsweise umgibt. Der Rahmen umfasst eine Frontwand. Die Frontwand erstreckt sich im Wesentlichen senkrecht zu einer Einführrichtung, in welche das Filterelement in einen Aufnahmeraum eines Gehäuses der Luftfiltereinrichtung einführbar ist. Das Gehäuse der Luftfiltereinrichtung wird im Folgenden auch als "Luftfiltergehäuse" oder nur als "Gehäuse" bezeichnet. An einer Frontseite der Frontwand ist wenigstens ein Befestigungselement angeordnet. An dem wenigstens einen Befestigungselement ist ein Deckel der Luftfiltereinrichtung festlegbar, welcher zum Verschließen des Aufnahmeraums ausgebildet ist. Ein plattenförmiger Grundkörper der Frontwand weist eine Schmalseite auf. Über diese Schmalseite steht eine von dem wenigstens einen Befestigungselement separat ausgebildete Haltelasche des Filterelements über. Durch Einbringen der Haltelasche in eine auf Seiten des Gehäuses der Luftfiltereinrichtung vorgesehene Haltemulde ist das Filterelement gegen ein Bewegen in die Einführrichtung sicherbar.

Mit anderen Worten kann dann, wenn die Haltelasche in die Haltemulde des Gehäuses eingebracht ist, das Filterelement nicht mehr weiter in das Gehäuse eingeführt oder entgegen der Einführrichtung aus dem Gehäuse herausgezogen werden. Folglich ist durch das Einbringen der Haltelasche in die Haltemulde das gesamte Filterelement lagerichtig ausgerichtet. In dieser Einbauposition des Filterelements in dem Gehäuse ist dann auch das wenigstens eine Befestigungselement lagerichtig ausgerichtet, so dass der Deckel der Luftfiltereinrichtung zuverlässig an dem wenigstens einen Befestigungselement festgelegt oder fixiert werden kann. Folglich ist durch das Filterelement das Verschließen des Aufnahmeraums mittels des Deckels vereinfacht.

Wenn die Haltelasche in die auf Seiten des Gehäuses der Luftfiltereinrichtung vorgesehene Haltemulde eingreift, so ist jedoch nicht nur eine Vorfixierung des Filterelements in Bezug auf den Deckel des Luftfiltergehäuses erreicht. Vielmehr ist auch ein Verrutschen des Filterelements in dem Aufnahmeraum des Gehäuses selbst dann vermieden, wenn die Einführrichtung nicht horizontal ist, sondern das Filterelement schräg zur Horizontalen in den Aufnahmeraum eingeführt oder eingeschoben wird. Auch in einem solchen Fall verhindert die Haltelasche ein Herausrutschen aus dem Aufnahmeraum oder ein weiteres Hineinrutschen in den Aufnahmeraum, sobald die Haltelasche in die Haltemulde eingebracht ist.

Dies gilt insbesondere, wenn die Haltelasche in der Einbaulage des Filterelements im Wesentlichen in Richtung der Schwerkraft über die Schmalseite des plattenförmigen Grundkörpers der Frontwand übersteht, bei welcher es sich dann um eine untere Schmalseite des Grundkörpers handelt.

Aufgrund der von der Haltelasche separaten Ausbildung des insbesondere von der Haltelasche beabstandeten wenigstens einen Befestigungsmittels ist außerdem das Befestigungsmittel sehr gut für ein entsprechendes Verschlusselement zugänglich, welches an dem Deckel ausgebildet ist. Insbesondere kann durch eine solche Ausgestaltung erreicht werden, dass das an dem Deckel angeordnete Verschlusselement das Befestigungselement umschließt oder umgreift. Dies ist einer besonders robusten und belastbaren und zugleich sehr zuverlässigen Fixierung des Deckels an dem Filterelement zuträglich.

Von Vorteil ist bei dem Filterelement mit dem an der Frontseite der Frontwand angeordneten wenigstens einen Befestigungselement weiterhin, dass die Luftfiltereinrichtung des Kraftwagens nur dann betrieben werden kann, wenn das Filterelement in dem Aufnahmeraum eingebaut beziehungsweise in diesen eingebracht ist. Denn zum sicheren Verschließen des Aufnahmeraums mittels des Deckels der Luftfiltereinrichtung ist das wenigstens eine Befestigungselement erforderlich, welches Bestandteil des Filterelements ist. Mit anderen Worten ist eine in der Lage gesicherte beziehungsweise feste Anlage des Deckels an dem Luftfiltergehäuse nicht möglich, wenn das Filterelement nicht in den Aufnahmeraum des Gehäuses eingebracht oder eingebaut ist. Auf diese Weise kann verhindert werden, dass die Luftfiltereinrichtung unsachgemäß (nämlich ohne das Filterelement) betrieben wird. Folglich ermöglicht das Filterelement einen besonders funktionssicheren Betrieb der Luftfiltereinrichtung.

Insbesondere sorgt das Einbringen der Haltelasche in die auf Seiten des Gehäuses der Luftfiltereinrichtung vorgesehene Haltemulde dafür, dass das wenigstens eine Befestigungselement lagerichtig ausgerichtet ist und somit für ein in der Lage gesichertes Festlegen des Deckels an dem Luftfiltergehäuse verwendet werden kann.

Darüber hinaus wird das wenigstens eine Befestigungselement zusammen mit dem Filterelement ausgetauscht, wenn das Filterelement gewechselt wird. Dies ist im Hinblick darauf vorteilhaft, dass beispielsweise eine Spanngeometrie und/oder Haltegeometrie des Befestigungselements einem Verschleiß unterliegt, wenn der Deckel der Luftfiltereinrichtung an dem Befestigungselement festgelegt wird, um mittels des Deckels den in dem Luftfiltergehäuse ausgebildeten Aufnahmeraum zu verschließen. Es wird also auch das dem Verschleiß unterliegende wenigstens eine Befestigungselement bei einem Austausch des Filterelements erneuert beziehungsweise ersetzt.

Aufgrund des Anordnens des wenigstens einen Befestigungselements an der Frontseite der Frontwand, welche einer dem Filtermaterial zugewandten Rückseite der Frontwand gegenüberliegt, ist zudem das wenigstens eine Befestigungselement sehr gut zugänglich. Dies erleichtert das Zusammenwirken des Befestigungselements mit einem Verschlusselement des Deckels, um aufgrund dieses Zusammenwirkens ein dicht sitzendes Anliegen des Deckels an dem Gehäuse zu erreichen.

Das Einbringen der Haltelasche in die auf Seiten des Gehäuses vorgesehene Haltemulde bringt es zudem mit sich, dass bei einem Ausbauen des Filterelements, also bei einem Herausnehmen des Filterelements aus dem Aufnahmeraum entgegen der Einführrichtung, die Frontwand und somit das gesamte Filterelement zunächst ein Stück weit angehoben werden muss. Auf diese Weise kann sehr weitgehend verhindert werden, dass das Filterelement und insbesondere das Filtermaterial des Filterelements im Bereich des Gehäuses der Luftfiltereinrichtung hängenbleibt und in der Folge möglicherweise beschädigt wird.

Dies ist insbesondere dann sinnvoll, wenn das Filterelement nur vorübergehend ausgebaut wird, etwa um Staub oder Feststoffe durch Abschütteln oder Abklopfen von dem Filterelement zu entfernen und das Filterelement anschließend wieder in das Gehäuse einzubauen.

Eine derartige Handhabung des Filterelements ist insbesondere dann vorteilhaft, wenn der die Luftfiltereinrichtung aufweisende Kraftwagen als Lastkraftwagen ausgebildet ist, welcher in einer Umgebung mit hoher Staubbelastung zum Einsatz kommen soll, also etwa auf einer Baustelle oder dergleichen.

Vorzugsweise ist die Haltelasche einstückig mit dem Grundkörper der Frontwand ausgebildet. So lässt sich die Haltelasche besonders einfach und aufwandsarm bei der Fertigung des Rahmens bereitstellen.

Des Weiteren kann vorgesehen sein, dass die Haltelasche eine Dicke in die Einführrichtung aufweist, welche einer Dicke der Schmalseite des plattenförmigen Grundkörpers entspricht. Dadurch ist die Haltelasche besonders robust und belastbar ausgebildet.

Bei dem erfindungsgemäßen Filterelement ist das wenigstens eine Befestigungselement in einen hülsenförmigen Haltebereich eines an dem Deckel angeordneten Verschlusselements einführbar. Hierbei ist durch Drehen des Verschlusselements um eine Drehachse das von dem Haltebereich umgriffene wenigstens eine Befestigungselement mit dem Verschlusselement des Deckels verspannbar. Auf diese Weise ist eine sehr robuste und belastbare Festlegung beziehungsweise Fixierung des Deckels an dem Filterelement erreichbar.

Alternativ dazu kann bei dem erfindungsgemäßen Filterelement auch vorteilhafterweise das wenigstens eine Befestigungselement einen hülsenförmigen Haltebereich aufweisen, in welchen das an dem Deckel angeordnete Verschlusselement einführbar ist, wobei durch Drehen des Verschlusselements um eine Drehachse das von dem Haltebereich umgriffene wenigstens eine Befestigungselement mit dem Verschlusselement des Deckels verspannbar ist. Damit wird eine umgekehrte Geometrie realisiert, die eine ebenso vorteilhafte Lösung bildet.

Vorzugsweise ist das wenigstens eine Befestigungselement in Hochrichtung der Frontwand von einer unteren Schmalseite des plattenförmigen Grundkörpers beabstandet. Dies ist einerseits im Hinblick auf die gute Zugänglichkeit des Befestigungselements für das Verschlusselement des Deckels vorteilhaft.

Des Weiteren kann so erreicht werden, dass bei einem Einbringen oder Einschieben des Filterelements in den Aufnahmeraum die Schwerkraft dafür sorgt, dass sich die Frontwand in Einführrichtung gesehen absenkt, und so die Haltelasche in die Haltemulde eingebracht wird. Dann ist das Filterelement besonders gut in dem Aufnahmeraum gegen ein versehentliches Herausrutschen gesichert. Denn um aus dem Aufnahmeraum herausgenommen werden zu können, müsste das Filterelement im Bereich der Frontwand zunächst angehoben werden.

Vorzugsweise weist das wenigstens eine Befestigungselement zumindest ein von der Frontseite der Frontwand beabstandetes Halteteil auf. Hierbei ist das zumindest eine Halteteil zum Zwecke des Verschließens des Aufnahmeraums mittels des Deckels von einem korrespondierenden Halteteil des Verschlusselements hintergreifbar. Durch eine derartige Ausgestaltung des Befestigungselements kann eine besonders dicht sitzende Anlage des Deckels an dem Luftfiltergehäuse erreicht werden. Des Weiteren ist dann auch der Deckel gut in seiner Schließstellung in der Lage gesichert.

Vorzugsweise ist das zumindest eine Halteteil als von einem Schaft des Befestigungselements quer zur Einführrichtung abstehender Flügel ausgebildet. Ein derartiger Flügel lässt sich von dem korrespondierenden Halteteil des an dem Deckel angeordneten Verschlusselements besonders einfach hintergreifen. Zudem beansprucht ein derartiger Flügel nur sehr wenig Bauraum.

Für den Fall der umgekehrten Geometrie, wenn also das an dem Deckel angeordnete Verschlusselement in den hülsenförmigen Haltebereich am Befestigungselement einführbar ist, gelten die obigen Ausführungen betreffend der Geometrie des Haltebereichs am Verschlusselement analog für die Gestaltung des Haltebereichs am Befestigungselement.

Trotzdem lässt sich eine sichere Fixierung des Deckels im Bereich einer Aufnahmeöffnung erreichen, welche zum Einbringen des Filterelements in den Aufnahmeraum in dem Luftfiltergehäuse vorgesehen sein kann. Denn wenn das Verschlusselement des Deckels mit dem Befestigungselement zusammenwirkt und hierbei das korrespondierende Halteteil des Verschlusselements den Flügel hintergreift, ist der Deckel sehr gut fixiert.

Von Vorteil ist es weiterhin, wenn das zumindest eine Halteteil einen ersten Endbereich und einen zweiten Endbereich aufweist, wobei das zumindest eine Halteteil eine von dem ersten Endbereich zu dem zweiten Endbereich hin rampenförmig verlaufende Gestalt aufweist. An einer derartigen Rampe kann das korrespondierende Halteteil des Verschlusselements beim Festlegen des Deckels an dem Filterelement entlangbewegt werden, wenn der Deckel an dem Gehäuse in seiner Schließstellung gesichert wird.

Die rampenförmig verlaufende Gestalt des Halteteils vereinfacht einerseits das Festlegen des Deckels an dem Befestigungselement. Zudem kann eine besonders dicht sitzende Anlage des Deckels an dem Luftfiltergehäuse erreicht werden. Denn aufgrund der rampenförmigen Gestalt kann beim Sichern des Deckels in seiner Schließstellung, in welcher der Deckel an dem Gehäuse anliegt, eine die Abdichtung unterstützende Bewegung des Deckels hin zu dem Gehäuse erreicht werden.

Zudem lassen sich auf diese Weise Toleranzen, insbesondere Fertigungstoleranzen, besonders weitgehend ausgleichen, und dennoch ist der Deckel dicht sitzend mit dem Gehäuse in Anlage, wenn der Deckel an dem wenigstens einen Befestigungselement des Filterelements festgelegt ist.

Vorzugsweise umfasst der Rahmen des Filterelements zwei Seitenwände, welche sich von der Frontwand in die Einführrichtung erstrecken. Hierbei weist das Filterelement wenigstens einen von der Frontwand beabstandeten und das Filtermaterial abstützenden Stützsteg auf. Der wenigstens eine Stützsteg verbindet die Seitenwände miteinander. Durch das Vorsehen eines derartigen Stützstegs sind der Rahmen und zudem das Filtermaterial gut stabilisiert, welches der Rahmen des Filterelements zumindest bereichsweise (und vorzugsweise vollständig) umgibt, beziehungsweise um welches der Rahmen des Filterelements zumindest bereichsweise (und vorzugsweise vollständig) umläuft. Dies ermöglicht es beispielsweise, nach einem Entnehmen des Filterelements aus dem Aufnahmeraum auf einer Rohluftseite des Filtermaterials zurückgehaltene Feststoffe in Form von Staub oder dergleichen von dem Filtermaterial durch Abschütteln oder Abklopfen zu entfernen, ohne eine Formgebung des Filtermaterials dauerhaft zu beeinträchtigen.

Wenn das Filtermaterial eine Mehrzahl von Falten aufweist, so kann der Stützsteg nach Art von Zinken oder Stiften ausgebildete Vorsprünge aufweisen, welche von einem beispielsweise leistenförmigen Rücken des Stützstegs abstehen und in die Falten des Filtermaterials eingreifen. So kann auch bei und nach einem Entfernen von Feststoffen von dem gefalteten Filtermaterial durch Abklopfen oder Ausschütteln oder dergleichen die Form der Falten des Filtermaterials sehr gut beibehalten werden.

Die erfindungsgemäße Luftfiltereinrichtung für einen Kraftwagen weist ein erfindungsgemäßes Filterelement auf, wobei das Filterelement in einen Aufnahmeraum eingebracht ist, welcher in einem Gehäuse der Luftfiltereinrichtung ausgebildet ist.

Die Luftfiltereinrichtung kann insbesondere als Luftfiltereinrichtung einer Klimaanlage beziehungsweise Belüftungseinrichtung des Kraftwagens ausgebildet sein. Des Weiteren kann die Luftfiltereinrichtung für einen Ansaugtrakt eines Verbrennungsmotors des Kraftwagens vorgesehen sein, also als Filter für die von dem Verbrennungsmotor angesaugte oder sonst wie zugeführte Luft.

Vorzugsweise ist dann, wenn die Haltelasche des Filterelements in eine auf Seiten des Gehäuses der Luftfiltereinrichtung vorgesehene Haltemulde eingreift, der Aufnahmeraum mittels eines Deckels der Luftfiltereinrichtung verschließbar. Hierfür ist der Deckel an dem wenigstens einen Befestigungselement des Filterelements festlegbar. Auf diese Weise kann sichergestellt werden, dass nur bei korrekt in das Luftfiltergehäuse eingebautem Filterelement der Aufnahmeraum mittels des Deckels sicher verschlossen werden kann.

Zudem sorgt das Eingreifen der Haltelasche des Filterelements in die Haltemulde des Gehäuses dafür, dass das wenigstens eine Befestigungselement des Filterelements lagerichtig ausgerichtet ist beziehungsweise sich in einer Position befindet, in welcher das Befestigungselement mit wenigstens einem an dem Deckel ausgebildeten Verschlusselement zusammenwirken kann. So ist ein sicheres Verschließen des Gehäuses mittels des Deckels erreichbar.

Vorzugsweise weist das Gehäuse der Luftfiltereinrichtung wenigstens ein Rückhalteelement auf, welches der Haltemulde in Einführrichtung vorgelagert ist. Ein derartiges Rückhalteelement verhindert besonders weitgehend, dass das Filterelement sich ungewollt aus dem Aufnahmeraum herausbewegt, sobald sich die Haltelasche in der Haltemulde befindet. Insbesondere kann hierfür vorgesehen sein, dass die Haltelasche an dem wenigstens einen Rückhalteelement anliegt, wenn die Haltelasche in die Haltemulde eingebracht ist und der Deckel an dem Filterelement festgelegt ist.

Das wenigstens eine Rückhalteelement kann insbesondere als in Einführrichtung gesehen schräg ansteigender, rampenförmiger Haltezinken ausgebildet sein. In Längserstreckungsrichtung der Haltemulde können mehrere derartige rampenförmige Haltezinken der Haltemulde in Einführrichtung vorgelagert sein. Dann lässt sich eine Unterseite der Haltelasche sehr einfach über diese rampenförmigen Haltezinken schieben, bis sich dann die Haltelasche, vorzugsweise bedingt durch die Schwerkraft, in die Haltemulde absenkt, welche den Haltezinken in Einführrichtung nachgelagert ist. Die Haltelasche kann also insbesondere mit den rampenförmigen Haltezinken hinterschnittig werden, sobald die Haltelasche in die Haltemulde eingreift.

Vorzugsweise weist das Gehäuse wenigstens eine Rampe auf, welche in Längserstreckungsrichtung der Haltemulde neben der Haltemulde angeordnet ist. Hierbei ist die wenigstens eine Rampe ausgehend von der Haltemulde in Einführrichtung gesehen schräg abfallend ausgebildet. Durch eine derartige Rampe kann sehr einfach und sicher verhindert werden, dass sich bei einem Herausnehmen oder Herausziehen des Filterelements aus dem Aufnahmeraum das Filterelement verhakt und/oder das Filtermaterial beschädigt wird.

Wenn das Filterelement den wenigstens einen Stützsteg aufweist, welcher die Seitenwände des Rahmens miteinander verbindet, so verhindert die wenigstens eine Rampe auch, dass das Filterelement mit einem solchen Stützsteg an einem Bauteil des Gehäuses hängenbleibt beziehungsweise sich der Stützsteg an einem solchen Bauteil verhakt.

Vorzugsweise weist die wenigstens einen Rampe einen Scheitelbereich auf, wobei eine Höhe der wenigstens einen Rampe in dem Scheitelbereich größer ist als die maximale Höhe des wenigstens einen Rückhalteelements. So kann sehr einfach sichergestellt werden, dass der Rahmen des Filterelements beim Herausziehen des Filterelements aus dem Aufnahmeraum nicht an dem wenigstens einen Rückhalteelement hängenbleibt.

Zusätzlich oder alternativ kann vorgesehen sein, dass die wenigstens eine Rampe in Einführrichtung gesehen zu dem Scheitelbereich hin schräg ansteigend ausgebildet ist. Dies erleichtert das Einführen des Filterelements in den Aufnahmeraum, welcher in dem Gehäuse der Luftfiltereinrichtung ausgebildet ist.

Vorzugsweise weist der Deckel wenigstens ein Verschlusselement auf, welches relativ zu einem Grundkörper des Deckels drehbar ist. Hierbei hintergreift in einer Schließstellung des Verschlusselements wenigstens ein Halteteil des Verschlusselements ein korrespondierendes Halteteil des wenigstens einen Befestigungselements. Aufgrund eines derartigen Zusammenwirkens des Verschlusselements mit dem Befestigungselement ist eine besonders sichere und dichte Fixierung des Deckels in seiner Lage an dem Gehäuse erreichbar, wenn der Deckel den Aufnahmeraum des Gehäuses verschließt. Das Verschlusselement kann insbesondere nach Art eines Drehverschlusses ausgebildet sein.

Insbesondere kann vorgesehen sein, dass der Deckel schwenkbar an dem Luftfiltergehäuse gehalten ist. Dann kann durch ein Herunterklappen des Deckels erreicht werden, dass das wenigstens eine mit dem Befestigungselement des Filterelements korrespondierende Verschlusselement des Deckels mit dem Befestigungselement zusammenwirken kann. Zudem lässt sich ein derartiges Verschließen des Aufnahmeraums mittels des Deckels sehr intuitiv bewerkstelligen.

Die für das erfindungsgemäße Filterelement beschriebenen Vorteile und bevorzugten Ausführungsformen gelten auch für die erfindungsgemäße Luftfiltereinrichtung und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer schematischen Perspektivansicht ein Filterelement für eine Luftfiltereinrichtung eines Kraftwagens;
- Fig. 2: eine vergrößerte Detailansicht des Filterelements gemäß Fig. 1, in welcher ein an einer Frontseite einer Frontwand eines Rahmens des Filterelements angeordnetes Befestigungselement besser zu sehen ist;
- Fig. 3: ausschnittsweise ein Gehäuse der Luftfiltereinrichtung, welches zum Aufnehmen des Filterelements gemäß Fig. 1 ausgebildet ist;
- Fig. 4: eine teilweise geschnittene Detailansicht im Bereich einer Aufnahmeöffnung des Gehäuses, über welche das Filterelement gemäß Fig. 1 in das Gehäuse eingeschoben werden kann;
- Fig. 5: in einer teilweise geschnittenen Seitenansicht das Einbringen des Filterelements gemäß Fig. 1 in das Gehäuse gemäß Fig. 3;
- Fig. 6: in einer teilweise geschnittenen Seitenansicht das in einen Aufnahmeraum des Gehäuses eingebrachte Filterelement, welches in Einführrichtung seine Endlage erreicht hat;
- Fig. 7: in einer vergrößerten Detailansicht einen frontseitigen Abschnitt des Filterelements sowie des Gehäuses, wobei die Frontwand des Filterelements sich auf der Höhe einer Haltemulde befindet, welche auf Seiten des Gehäuses ausgebildet ist;
- Fig. 8: das schwerkraftbedingte Absenken der Frontwand derart, dass eine einstückig mit der Frontwand ausgebildete Haltelasche des Filterelements in die Haltemulde eingreift;
- Fig. 9: ausschnittsweise und in einer frontseitigen Ansicht einen Deckel für das Gehäuse der Luftfiltereinrichtung, wobei der Deckel ein als Drehverschluss ausgebildetes Verschlusselement aufweist, welches zum Festlegen des Deckels mit dem in Fig. 2 gezeigten Befestigungselement des Filterelements zusammenwirkt;
- Fig. 10: ausschnittsweise eine rückwärtige Ansicht des Deckels im Bereich des Drehverschlusses;
- Fig. 11: einen ersten Schritt bei einem Ausbau des Filterelements beziehungsweise bei einer Demontage des Filterelements, wobei das Filterelement im Bereich der Frontwand angehoben und somit die Haltelasche aus der Haltemulde herausbewegt wird;
- Fig. 12: in einer teilweise geschnittenen Ansicht das Entlanggleiten eines Stützstegs einer Mehrzahl von Stützstegen des Rahmens über zu beiden Seiten der Haltemulde angeordnete Rampen beim Herausziehen des Filterelements aus dem Aufnahmeraum;
- Fig. 13: perspektivisch den zwei Stützstege umfassenden Rahmen des Filterelements gemäß Fig. 1 ohne ein Filtermaterial des Filterelements;
- Fig. 14: eine alternative Ausführungsform des Befestigungselements in einer Detailansicht; und
- Fig. 15: eine alternative Ausführungsform des Halteteils am Deckel in einer Detailansicht.

In den Fig. sind gleiche oder funktionsgleiche Elemente mit gleichen Bezugszeichen versehen.

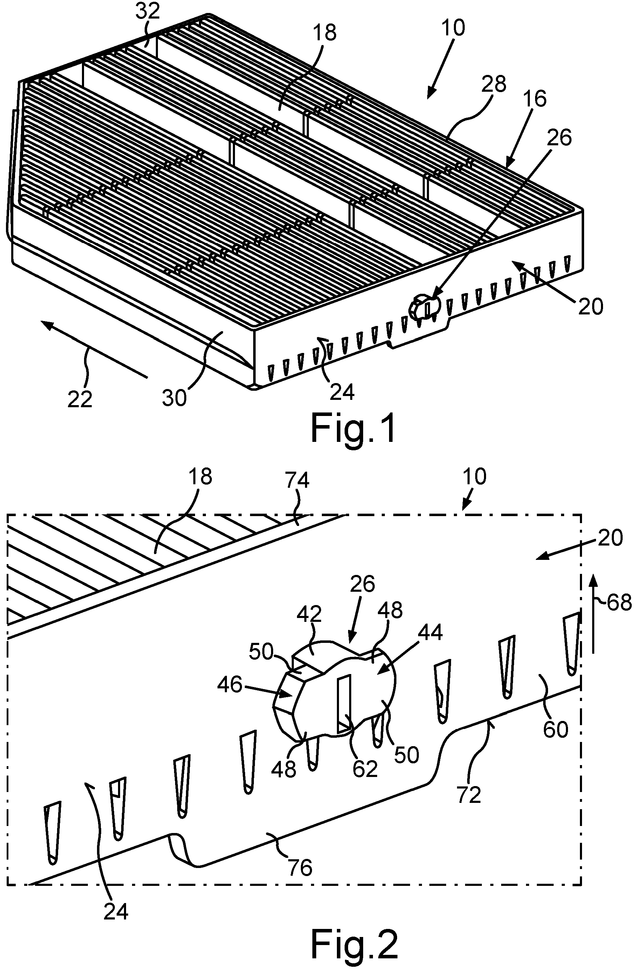

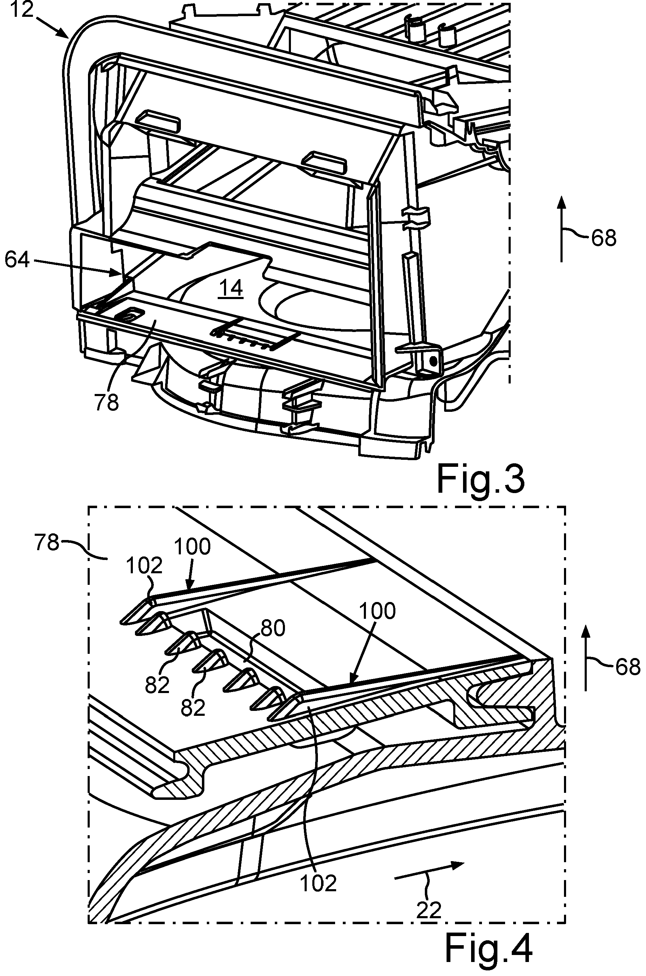

In Fig. 1 ist in einer schematischen Perspektivansicht ein Filterelement 10 gezeigt, welches zum Einbau in ein Gehäuse 12 (vergleiche Fig. 3) einer Luftfiltereinrichtung eines insbesondere als Lastkraftwagen ausgebildeten Kraftwagens vorgesehen ist. In dem Gehäuse 12 der Luftfiltereinrichtung ist ein Aufnahmeraum 14 ausgebildet (vergleiche Fig. 3), in welchen das in Fig. 1 gezeigte Filterelement 10 eingebracht oder eingebaut werden kann.

Das Filterelement 10 umfasst einen Rahmen 16, welcher ein Filtermaterial 18 des Filterelements 10 umgibt beziehungsweise einfasst. Bei Ausbildung des Filterelements 10 als Faltenfilter kann das Filtermaterial 18 wie vorliegend beispielhaft gezeigt eine Vielzahl von Falten aufweisen. Jedoch sind auch andere Ausgestaltungen des im Betrieb des Filterelements 10 von Luft durchströmbaren Filtermaterials 18 möglich.

Der Rahmen 16, welcher vorliegend das Filtermaterial 18 umfangsseitig vollständig umgibt beziehungsweise einschließt, umfasst eine Frontwand 20. Die Frontwand 20 erstreckt sich senkrecht zu einer Einführrichtung 22, welche in Fig. 1 durch einen Pfeil veranschaulicht ist. In die Einführrichtung 22 kann das Filterelement 10 in den Aufnahmeraum 14 eingeführt werden, welcher in dem Gehäuse 12 oder Luftfiltergehäuse ausgebildet ist (vergleiche Fig. 3).

An einer Frontseite 24 der Frontwand 20 ist ein Befestigungselement 26 angeordnet, welches in Fig. 2 vergrößert dargestellt ist. Der Rahmen 16 umfasst vorliegend auch zwei Seitenwände 28, 30, welche sich ausgehend von der Frontwand 20 in die Einführrichtung 22 erstrecken.

An seinem rückwärtigen Ende ist der Rahmen 16 mittels einer Rückwand 32 geschlossen, welche vorliegend abgewinkelt ausgebildet ist. Dies ist der Form des Gehäuses 12 geschuldet, so dass in Varianten des Filterelements 10 auch ein anders gestalteter Rahmen 16 vorgesehen sein kann. Des Weiteren braucht der Rahmen 16 nicht, wie vorliegend beispielhaft gezeigt, das Filtermaterial 18 umfangsseitig umlaufend zu umschließen.

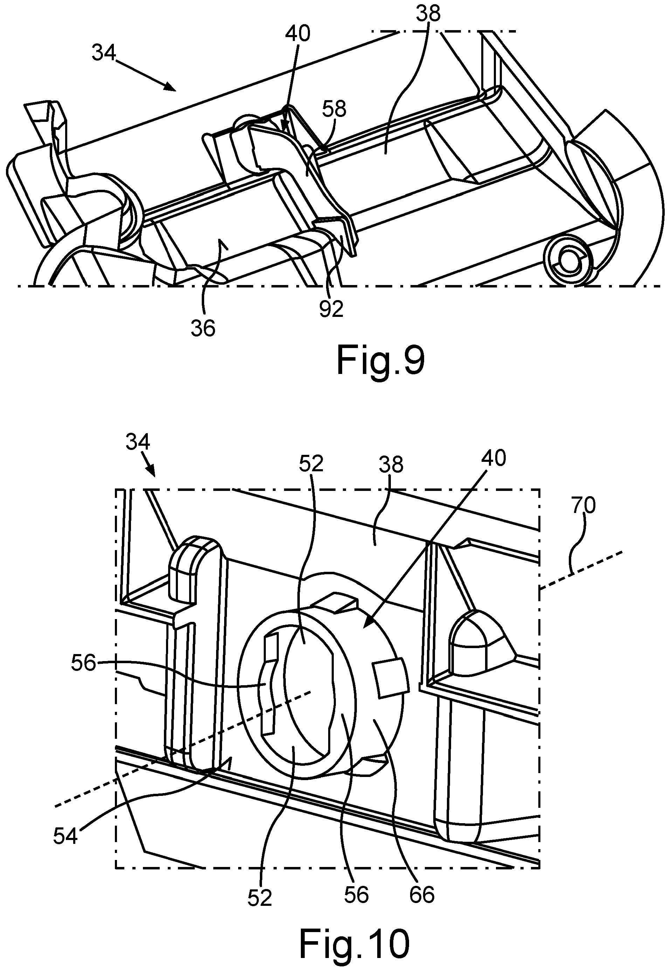

Das in Fig. 2 gezeigte Befestigungselement 26 dient dem Festlegen oder Sichern eines Deckelelements oder Deckels 34 an dem Gehäuse 12. Der Deckel 34 ist in Fig. 9 ausschnittsweise in einer Ansicht auf seine der Umgebung des Gehäuses 12 zugewandte Außenseite 36 gezeigt.

An einem Grundkörper 38 des Deckels 34 ist ein Verschlusselement gehalten, welches vorliegend als Drehverschluss 40 ausgebildet ist. Mittels eines hebelartigen Griffteils 58 kann der Drehverschluss 40 relativ zu dem Grundkörper 38 des Deckels 34 um eine Drehachse 70 verdreht werden, welche in Fig. 10 angedeutet ist. Mit dem Drehverschluss 40 wirkt das Befestigungselement 26 (vergleiche Fig. 2) zusammen, um den Deckel 34 in seiner Schließstellung zu sichern.

Hierfür weist das Befestigungselement 26 einen Schaft 42 auf, welcher vorliegend nach Art eines Zylinders mit einer (optionalen) schlitzförmigen Ausnehmung 62 ausgebildet ist. Der Schaft 42 steht in die Einführrichtung 22 von der Frontseite 24 der Frontwand 20 ab. Von dem Schaft 42 erstrecken sich, vorliegend im Wesentlichen senkrecht zu der Einführrichtung 22, zwei Halteteile in Form eines ersten Flügels 44 und eines zweiten Flügels 46.

Von einem jeweiligen ersten Endbereich 48 hin zu einem zweiten, entgegengesetzten Endbereich 50 weist der jeweilige Flügel 44, 46 vorzugsweise eine rampenförmige Gestalt auf. Dementsprechend verdickt sich der jeweilige Flügel 44, 46 ausgehend von dem jeweiligen ersten Endbereich 48 in Richtung einer Höhe des jeweiligen Flügels 44, 46 zum entgegengesetzten Endbereich 50 des jeweiligen Flügels 44, 46 hin. Die Höhe des jeweiligen Flügels 44, 46 entspricht somit einer Dicke des jeweiligen Flügels 44, 46 in der Einführrichtung 22. Die an dem jeweiligen Flügel 44, 46 ausgebildete Rampe weist damit in Richtung der Frontwand 20 des Filterelements 10.

Mit den Flügeln 44, 46 korrespondieren Ausnehmungen 52 (vergleiche Fig. 10), welche an einer Innenseite 54 des Deckels 34 im Bereich des Drehverschlusses 40 ausgebildet sind. Des Weiteren weist der Drehverschluss 40 gemäß Fig. 10 an seiner Innenseite zwei Halteteile 56 auf, welche dazu ausgebildet sind, die Flügel 44, 46 des Befestigungselements 26 zu hintergreifen, wenn der Deckel 34 in seiner Schließstellung gesichert ist, in welcher der Deckel 34 den Aufnahmeraum 14 im Bereich einer Aufnahmeöffnung 64 (vergleiche Fig. 3) verschließt. Über die Aufnahmeöffnung 64 kann das Filterelement 10 in den Aufnahmeraum 14 eingebracht werden.

Durch die Flügel 44, 46 sind Spanngeometrien beziehungsweise Haltegeometrien auf Seiten des Filterelements 10 bereitgestellt, welche mit den Halteteilen 56 der Drehverschlusses 40 zusammenwirken, um den Deckel 34 in seiner Geschlossenstellung zu sichern. Vorliegend weist also der an dem Deckel 34 angebrachte Drehverschluss 40 die Halteteile 56 auf, welche mit der Spanngeometrie oder Haltegeometrie korrespondieren, die durch die Flügel 44, 46 bereitgestellt ist.

Das Befestigungselement 26, welches vorzugsweise fest mit dem Rahmen 16 des Filterelements 10 verbunden oder einstückig mit der Frontwand 20 ausgebildet ist, sorgt demnach vorliegend für eine Fixierung oder Festlegung des Deckels 34 in seiner Geschlossenstellung nach Art einer Bajonettverriegelung. Und in der Geschlossenstellung verschließt der Deckel 34 den in dem Gehäuse 12 ausgebildeten Aufnahmeraum 14 im Bereich der Aufnahmeöffnung 64.

Aus Fig. 10 ist weiter ersichtlich, dass der Drehverschluss 40 einen hülsenförmigen Haltebereich 66 aufweist, in welchen das Befestigungselement 26 eingeführt werden kann, indem der Deckel 34 geschlossen wird. Hierfür sind die Ausnehmungen 52 des Drehverschlusses 40 zunächst so auszurichten, dass die Flügel 44, 46 im Bereich der Ausnehmungen 52 in den hülsenförmigen Haltebereich 66 eintreten können. Der Haltebereich 66 umgreift dann das Befestigungselement 26. Wenn anschließend durch Betätigen des Griffteils 58 (vergleiche Fig. 9) der Drehverschluss 40 um seine Drehachse 70 gedreht oder verdreht wird, so hintergreifen die Halteteile 56 des Drehverschlusses 40 die Flügel 44, 46. Aufgrund der rampenförmigen Gestalt der Flügel 44, 46 wird hierbei das Befestigungselement 26 mit dem Drehverschluss 40 des Deckels 34 verspannt, und der Deckel 34 wird dicht sitzend gegen das Gehäuse 12 gezogen.

Aufgrund der mit der Gestalt der Flügel 44, 46 korrespondierenden Geometrie der Ausnehmungen 52 lässt sich für eine Person, welche mittels des Deckels 34 den Aufnahmeraum 14 des Gehäuses 12 verschließt, die Funktionsweise des Drehverschlusses 40 sehr einfach visuell erkennen. Dies ist im Hinblick auf eine einfache Bedienung des Drehverschlusses 40 vorteilhaft.

Für das Griffteil 58 kann an dem Deckel 34 ein Anschlag 92 ausgebildet sein (vergleiche Fig. 9), welcher eine Endstellung des Drehverschlusses 40 beim Fixieren des Deckels 34 vorgibt. In dieser Endstellung hintergreifen die Halteteile 56 des Drehverschlusses 40 (vergleiche Fig. 10) die Flügel 44, 46 des Befestigungselements 26 (vergleiche Fig. 2).

Aus Fig. 2 ist weiter ersichtlich, dass die Frontwand 20 eine obere Schmalseite 74 aufweist. Dieser oberen Schmalseite 74 liegt in Hochrichtung 68 des Filterelements 10, welche in Fig. 2 durch einen Pfeil veranschaulicht ist, eine untere Schmalseite 72 eines plattenförmigen Grundkörpers 60 der Frontwand 20 gegenüber. Die Hochrichtung 68 ist vorzugsweise in der Einbaulage des Filterelements 10 der Richtung der Schwerkraft entgegengesetzt.

Vorliegend weist das Filterelement 10 eine von dem Befestigungselement 26 separat ausgebildete und von dem Befestigungselement 26 beabstandete Haltelasche 76 auf. Diese Haltelasche 76 steht über die untere Schmalseite 72 des plattenförmigen Grundkörpers 60 der Frontwand 20 über. Vorliegend ist diese Haltelasche 76 einstückig mit dem Grundkörper 60 der Frontwand 20 ausgebildet. Die Funktionen dieser Haltelasche 76 werden im Folgenden mit Bezug auf die nachstehenden Figuren erläutert.

Wie aus Fig. 3 hervorgeht, ist die Aufnahmeöffnung 64 unterseitig durch eine Wandung 78 begrenzt. Diese Wandung 78 ist in Fig. 4 ausschnittsweise und teilweise geschnitten dargestellt.

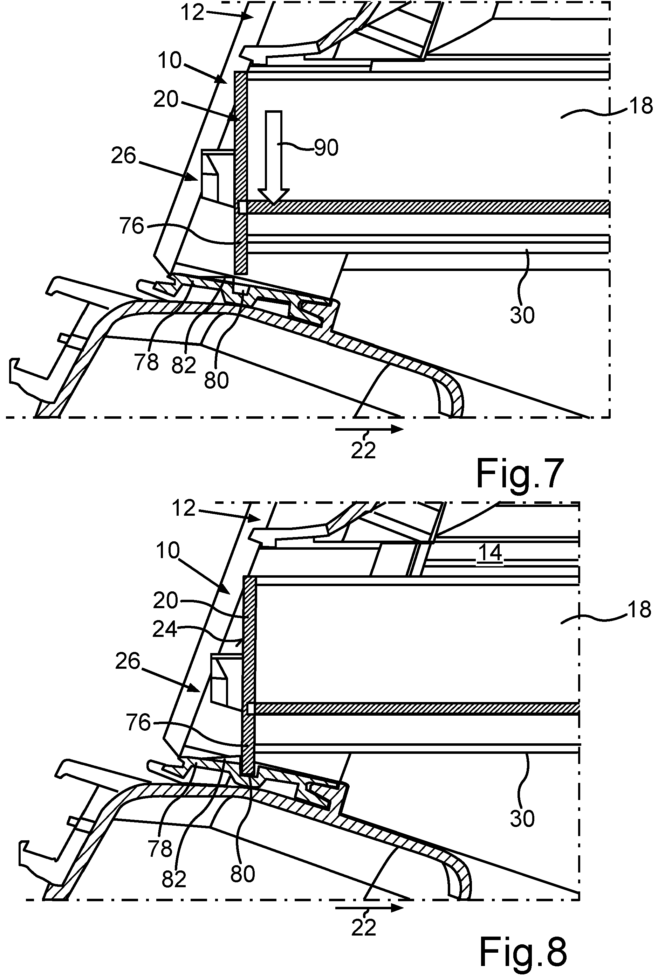

Insbesondere aus Fig. 4 ist gut erkennbar, dass in der Wandung 78 eine Haltemulde 80 ausgebildet ist, welche von den Abmessungen her, vorliegend speziell im Hinblick auf eine Tiefe in die Einführrichtung 22 und auf eine Breite senkrecht zu der Einführrichtung 22, mit den Abmessungen der Haltelasche 76 korrespondiert. Dementsprechend kann die Haltelasche 76 des Filterelements 10 in die Haltemulde 80 eingebracht werden, welche auf Seiten des Gehäuses 12 der Luftfiltereinrichtung vorgesehen ist. Wenn sich das Filterelement 10 in dem Aufnahmeraum 14 des Gehäuses 12 in seiner Einbaulage befindet (vergleiche Fig. 8), so greift dementsprechend die Haltelasche 76 in die Haltemulde 80 ein.

Die Haltelasche 76 oder Rastlasche, welche am unteren Rand des Rahmens 16 ausgebildet ist, fungiert somit nach Art eines Widerlagers des Filterelements 10. Dementsprechend verhindert die Haltelasche 76, dass das Filterelement 10 aus dem Aufnahmeraum 14 herausrutschen kann. Dies ist insbesondere dann vorteilhaft, wenn die Einführrichtung 22 in der konkreten Einbausituation des Filterelements 10 nicht horizontal, sondern geneigt verläuft.

Des Weiteren dient die Haltelasche 76 einer Vorfixierung des Filterelements 10 im Hinblick auf den Deckel 34. Denn wenn sich die Haltelasche 76 in der Haltemulde 80 befindet, so ist auch das Befestigungselement 26 oder Halteelement lagerichtig ausgerichtet, nämlich so, dass der Drehverschluss 40 (vergleiche Fig. 9 und Fig. 10) mit dem Befestigungselement 26 zusammenwirken kann.

Vorliegend ist das Befestigungselement 26 in Breiten- oder Querrichtung der Frontwand 20, also senkrecht zu der Einführrichtung 22 gesehen, im Wesentlichen mittig an der Frontseite 24 der Frontwand 20 angeordnet. Dies bewirkt ein sehr gleichmäßiges Andrücken des Deckels 34 gegen das Gehäuse 12, wenn der Drehverschluss 40 betätigt und hierbei um die Drehachse 70 verdreht wird.

Des Weiteren sorgen die beiden großflächigen, im Bereich der Flügel 44, 46 ausgebildeten Rampen des Befestigungselements 26 für eine sehr robuste Fixierung des Deckels 34 an dem Filterelement 10.

Das Betätigen des Drehverschlusses 40 sorgt außerdem dafür, dass die Frontseite 24 des der Haltelasche 76 bzw. des darüber anschließenden Filterelements 10 in Anlage mit Rückhalteelementen gerät, welche vorliegend nach Art von rampenförmigen Haltezinken 82 ausgebildet sind (vergleiche Fig. 4), und welche in Einführrichtung 22 der Haltemulde 80 vorgelagert sind.

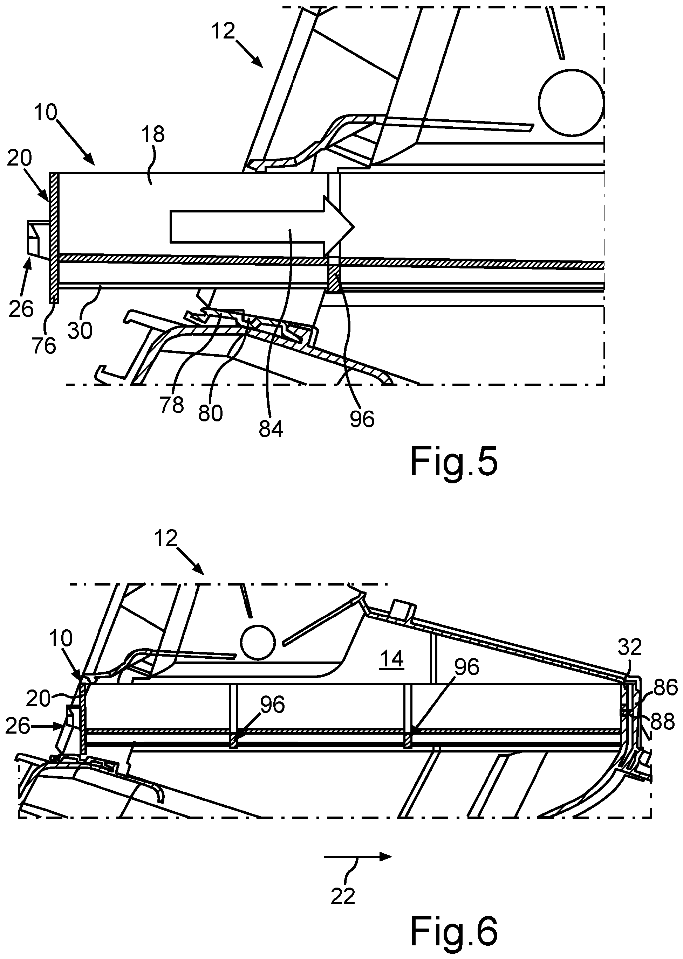

Vorliegend steigen die Haltezinken 82 in Einführrichtung 22 gesehen schräg an, so dass sich die Haltelasche 76 beim Entlanggleiten auf den Haltezinken 82 zunächst in die Hochrichtung 68 bewegt, wenn das Filterelement 10 über die Aufnahmeöffnung 64 in den Aufnahmeraum 14 eingeschoben wird. In Fig. 5 ist dieses Einschieben des Filterelements 10 in den Aufnahmeraum 14 durch einen Pfeil 84 veranschaulicht, dessen Richtung der Einführrichtung 22 gleich ist.

In Fig. 6 ist nun die Situation gezeigt, in welcher das Filterelement 10 in dem Aufnahmeraum 14 seine horizontale Endlage erreicht hat. Dementsprechend befindet sich die Rückwand 32 des Rahmens 16 in der Nähe einer den Aufnahmeraum 14 rückwärtig begrenzenden Wand 86 des Gehäuses 12. Insbesondere kann hierbei eine an der Rückwand 32 des Rahmens 16 angeordnete Dichtung 88 an der Wand 86 anliegen.

In Fig. 7 ist durch einen weiteren Pfeil 90 veranschaulicht, wie sich nach dem Überqueren der Haltezinken 82 (vergleiche Fig. 4) und dem Erreichen der Haltemulde 80 die Haltelasche 76 schwerkraftbedingt nach unten absenkt. Folglich gelangt die Haltelasche 76 schwerkraftbedingt in die nach Art eines Schlitzes ausgebildete Haltemulde 80. Denn der Rahmen 16 des Filterelements 10 fällt schwerkraftbedingt nach unten, sobald sich die Haltelasche 76 in Einführrichtung 22 auf der Höhe der Haltemulde 80 befindet.

In Fig. 8 ist diese Einbausituation dargestellt, in welcher die Haltelasche 76 in die Haltemulde 80 eingreift. In Auszugsrichtung, also entgegen der Einführrichtung 22, ist somit die Haltelasche 76 hinterschnittig mit dem Gehäuse 12. Dann befindet sich auch das Befestigungselement 26 in seiner lagerichtigen Position, in welcher nach einem Herunterklappen des Deckels 34 beziehungsweise einem entsprechenden Verschwenken des Deckels 34 um eine auf Seiten des Gehäuses 12 bereitgestellte Schwenkachse der Drehverschluss 40 mit dem Befestigungselement 26 zusammenwirken kann.

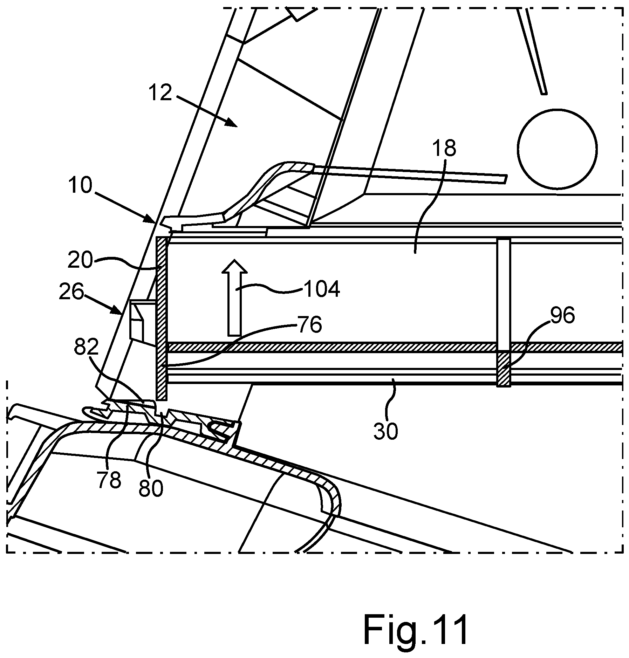

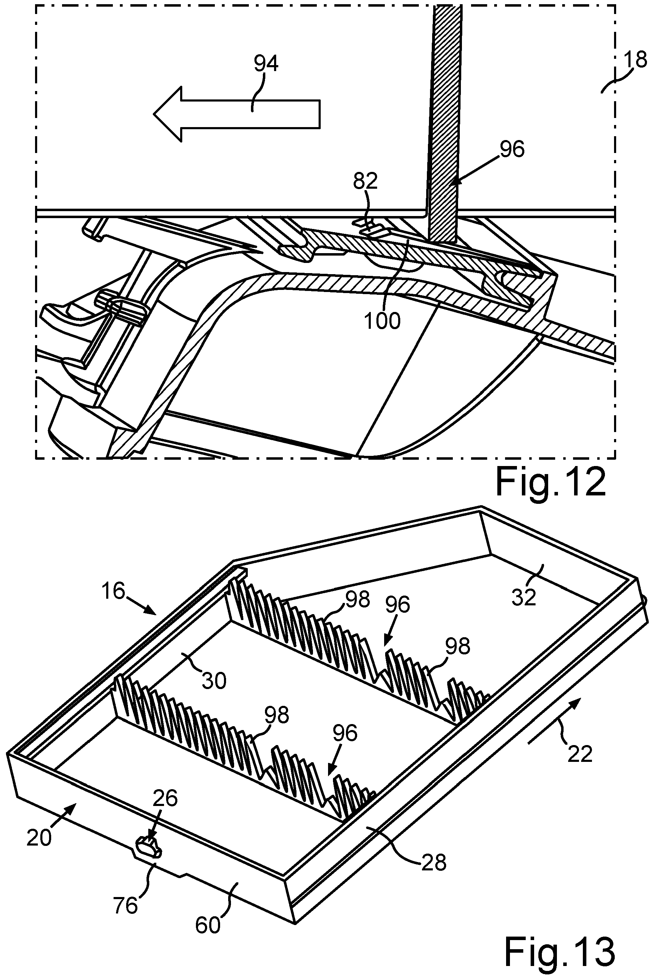

Mit Bezug auf Fig. 11 und Fig. 12 soll das Herausnehmen des Filterelements 10 aus dem Aufnahmeraum 14 erläutert werden. Zunächst wird hierbei der Rahmen 16 des Filterelements 10 im Bereich der Frontwand 20 angehoben, so dass die Haltelasche 76 sich nicht mehr in der Haltemulde 80 befindet. Dieses Herausbewegen der Haltelasche 76 aus der Haltemulde 80 ist in Fig. 11 durch einen Pfeil 104 veranschaulicht, dessen Pfeilrichtung dem in Fig. 7 gezeigten Pfeil 90 entgegengesetzt ist. Ansonsten entspricht die Fig. 7 dargestellte Ausrichtung des Filterelements 10 bezogen auf das Gehäuse 12 der in Fig. 11 gezeigten Ausrichtung des Filterelements 10 bezogen auf das Gehäuse 12.

Anschließend wird das Filterelement 10 entgegen der Einführrichtung 22 aus dem Aufnahmeraum 14 herausgezogen. Diese Bewegung ist in Fig. 12 durch einen Pfeil 94 veranschaulicht. Des Weiteren ist in Fig. 12 ein Stützsteg 96 des Rahmens 16 teilweise geschnitten dargestellt.

Aus Fig. 13 ist ersichtlich, dass der Rahmen 16 des Filterelements 10 vorliegend zwei derartige Stützstege 96 aufweist. Die Stützstege 96 verbinden die Seitenwände 28, 30 miteinander. Dies stabilisiert den Rahmen 16 des Filterelements 10.

Zudem weisen die Stützstege 96 eine Vielzahl von nach Art von Zinken 98 eines Kamms ausgebildeten Fortsätzen auf. Diese Zinken 98, welche von einem vorliegend leistenförmigen Rücken des jeweiligen Stützstegs 96 nach oben beziehungsweise in die Hochrichtung 68 abstehen, greifen von unten in die Falten des Filtermaterials 18 (vergleiche Fig. 1) ein. Auf diese Weise stützen insbesondere die sich vorliegend zu einem freien Ende hin verjüngenden Zinken 98 der Stützstege 96 das Filtermaterial 18 ab. Durch das Vorsehen der Stützstege 96 und der Zinken 98 ist eine große Formstabilität des Rahmens 16 und insbesondere des Filtermaterials 18 gewährleistet, selbst wenn das Filterelement 10 in die Einführrichtung 22 vergleichsweise lang ausgebildet ist. Letzteres kann insbesondere bei Verwendung des Filterelements 10 für eine Luftfiltereinrichtung eines Lastkraftwagens der Fall sein.

Die Stützstege 96 sorgen insbesondere dafür, dass Feststoffe, welche sich im Betrieb der Luftfiltereinrichtung auf dem Filtermaterial 18 abgesetzt haben, leicht von dem Filtermaterial 18 abgeklopft oder abgeschüttelt werden können, ohne dass hierbei die Falten des Filtermaterials 18 in Mitleidenschaft gezogen werden.

Aus Fig. 12 ist insbesondere in Zusammenschau mit Fig. 4 gut ersichtlich, dass beim Herausziehen des Filterelements 10 aus dem Aufnahmeraum 14 entgegen der Einführrichtung 22 eine Unterseite der Stützstege 96 entlang jeweiliger Rampen 100 geführt wird. Die Rampen 100 dienen somit als Anlaufschrägen für das Filterelement 10 beim Herausziehen des Filterelements 10 aus dem Aufnahmeraum 14.

Vorliegend sind an der Wandung 78 zwei Rampen 100 ausgebildet, welche in Längserstreckungsrichtung der Haltemulde 80 beziehungsweise in Richtung der Länge der nach Art eines Schlitzes ausgebildeten Haltemulde 80 seitlich neben der Haltemulde 80 angeordnet sind (vergleiche Fig. 4).

Ausgehend von einem Scheitelbereich 102 der jeweiligen Rampe 100, welcher sich in etwa auf der Höhe eines vorderen Rands der Haltemulde 80 befindet, sind die Rampen 100 in Einführrichtung 22 gesehen schräg abfallend ausgebildet. In dem Scheitelbereich 102 weisen die Rampen 100 vorliegend eine Höhe auf, welche größer ist als eine maximale Höhe der Haltezinken 82. Dadurch ist insbesondere verhindert, dass sich die Stützstege 96 beim Herausziehen des Filterelements 10 aus dem Aufnahmeraum 14 entgegen der Einführrichtung 22 mit den Haltezinken 82 verhaken oder an den Haltezinken 82 hängen bleiben (vergleiche Fig. 12).

Des Weiteren sind die Rampen 100 in die Einführrichtung 22 gesehen zu dem Scheitelbereich 102 hin schräg ansteigend ausgebildet, so wie auch die Haltezinken 82 (vergleiche Fig. 4). Dementsprechend verhindern die Rampen 100 auch, dass sich das Filterelement 10 beim Einführen des Filterelements 10 in den Aufnahmeraum 14 mit den Haltezinken 82 verhaken kann.

Die Rampen 100 verhindern außerdem, dass sich die Rückwand 32 des Rahmens 16 beim Herausziehen des Filterelements 10 aus dem Aufnahmeraum 14 insbesondere mit den Haltezinken 82 verhakt, und dass das Filtermaterial 18 beim Herausnehmen des Filterelements 10 aus dem Aufnahmeraum 14 beschädigt wird.

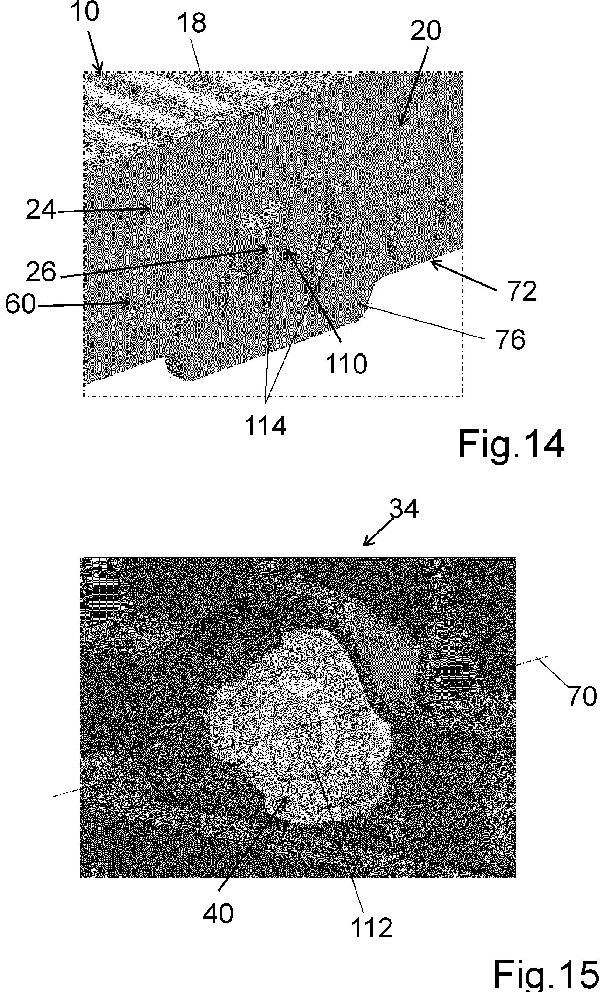

In den Fig. 14 und 15 ist eine alternative Ausführungsform des am Filterelement 10 befindlichen Befestigungselements 26 und des dazugehörigen Verschlusselements 40, welches am Deckel 34 angeordnet ist, gezeigt. Dabei ist im Unterschied zu den Figuren 2 bzw. 10 das Befestigungselement 26 so ausgestaltet, dass es einen hülsenförmigen Haltebereich 110 aufweist. In diesen Haltebereich 110 wird ein Halteteil 112 des Verschlusselements 40, welches am Deckel 34 angeordnet ist, eingeführt.

Dabei sind auch hier am Befestigungselement 26 von der Frontseite 24 beabstandete Halteteile 114 vorgesehen, die das Halteteil 112 hintergreifen. Anschließend erfolgt eine Drehung des Verschlusselements 40 um die Drehachse 70, wie oben beschrieben, die zu einer Verspannung führt. Somit wird durch eine analoge Geometrie eine Festsetzung des Filterelements 10 im Aufnahmeraum 14 sowie eine sichere Fixierung des Deckels 34 erreicht.

## Patentansprüche

1. Filterelement für eine Luftfiltereinrichtung eines Kraftwagens, mit einem Rahmen (16), welcher ein Filtermaterial (18) des Filterelements (10) zumindest bereichsweise umgibt, wobei der Rahmen (16) eine Frontwand (20) umfasst, welche sich im Wesentlichen senkrecht zu einer Einführrichtung (22) erstreckt, in welche das Filterelement (10) in einen Aufnahmeraum (14) eines Gehäuses (12) der Luftfiltereinrichtung einführbar ist, wobei an einer Frontseite (24) der Frontwand (20) wenigstens ein Befestigungselement (26) angeordnet ist, an welchem ein zum Verschließen des Aufnahmeraums (14) ausgebildeter Deckel (34) der Luftfiltereinrichtung festlegbar ist,
**dadurch gekennzeichnet, dass**
ein plattenförmiger Grundkörper (60) der Frontwand (20) eine Schmalseite (72) aufweist, über welche eine von dem wenigstens einen Befestigungselement (26) separat ausgebildete Haltelasche (76) des Filterelements (10) übersteht, wobei durch Einbringen der Haltelasche (76) in eine auf Seiten des Gehäuses (12) der Luftfiltereinrichtung vorgesehene Haltemulde (80) das Filterelement (10) gegen ein Bewegen in oder gegen die Einführrichtung (22) sicherbar ist, wobei das wenigstens eine Befestigungselement (26) in einen hülsenförmigen Haltebereich (66) eines an dem Deckel (34) angeordneten Verschlusselements (40) einführbar ist, wobei durch Drehen des Verschlusselements (40) um eine Drehachse (70) das von dem Haltebereich (66) umgriffene wenigstens eine Befestigungselement (26) mit dem Verschlusselement (40) des Deckels (34) verspannbar ist, oder das wenigstens eine Befestigungselement (26) einen hülsenförmigen Haltebereich (110) aufweist, in welchen ein an dem Deckel (34) angeordnetes Verschlusselement (40) einführbar ist, wobei durch Drehen des Verschlusselements (40) um eine Drehachse (70) das von dem Haltebereich (110) umgriffene wenigstens eine Verschlusselement (40) des Deckels (34) mit dem Befestigungselement (26) verspannbar ist.

2. Filterelement nach Anspruch 1,
**dadurch gekennzeichnet, dass**
das wenigstens eine Befestigungselement (26) zumindest ein von der Frontseite (24) der Frontwand (20) beabstandetes Halteteil (44, 46) aufweist, welches zum Verschließen des Aufnahmeraums (14) mittels des Deckels (34) von einem korrespondierenden Halteteil (56) des Verschlusselements (40) hintergreifbar ist.

3. Filterelement nach Anspruch 2,
**dadurch gekennzeichnet, dass**
das zumindest eine Halteteil (44, 46) als von einem Schaft (42) des Befestigungselements (26) quer zu der Einführrichtung (22) abstehender Flügel ausgebildet ist und/oder das zumindest eine Halteteil (44, 46) eine von einem ersten Endbereich (48) des Halteteils (44, 46) zu einem zweiten Endbereich (50) des Halteteils (44, 46) hin rampenförmig verlaufende Gestalt aufweist.

4. Filterelement nach Anspruch 1,
**dadurch gekennzeichnet, dass**
das Verschlusselement (40) zumindest ein von der Frontseite (24) der Frontwand (20) beabstandetes Halteteil (112) aufweist, welches zum Verschließen des Aufnahmeraums (14) mittels des Deckels (34) von einem korrespondierenden Halteteil (114) des Befestigungselements (26) hintergreifbar ist.

5. Filterelement nach einem der Ansprüche 1 bis 4,
**dadurch gekennzeichnet, dass**
der Rahmen (16) des Filterelements (10) zwei Seitenwände (28, 30) umfasst, welche sich von der Frontwand (20) in die Einführrichtung (22) erstrecken, wobei das Filterelement (10) wenigstens einen von der Frontwand (20) beabstandeten und das Filtermaterial (18) abstützenden Stützsteg (96) aufweist, welcher die Seitenwände (28, 30) miteinander verbindet.

6. Luftfiltereinrichtung für einen Kraftwagen, mit einem Filterelement (10) nach einem der Ansprüche 1 bis 5, wobei das Filterelement (10) in einen Aufnahmeraum (14) eingebracht ist, welcher in einem Gehäuse (12) der Luftfiltereinrichtung ausgebildet ist, wobei dann, wenn die Haltelasche (76) des Filterelements (10) in eine auf Seiten des Gehäuses (12) der Luftfiltereinrichtung vorgesehene Haltemulde (80) eingreift, der Aufnahmeraum (14) mittels eines Deckels (34) der Luftfiltereinrichtung verschließbar ist, welcher an dem wenigstens einen Befestigungselement (26) des Filterelements (10) festlegbar ist.

7. Luftfiltereinrichtung nach Anspruch 6,
**dadurch gekennzeichnet, dass**
das Gehäuse (12) der Luftfiltereinrichtung wenigstens ein, insbesondere als in Einführrichtung (22) gesehen schräg ansteigender, rampenförmiger Haltezinken ausgebildetes, Rückhalteelement (82) aufweist, welches der Haltemulde (80) in Einführrichtung (22) vorgelagert ist.

8. Luftfiltereinrichtung nach Anspruch 6 oder 7,
**dadurch gekennzeichnet, dass**
das Gehäuse wenigstens eine Rampe (100) aufweist, welche in Längserstreckungsrichtung der Haltemulde (80) neben der Haltemulde (80) angeordnet ist, wobei die wenigstens eine Rampe (100) ausgehend von der Haltemulde (80) in Einführrichtung (22) gesehen schräg abfallend ausgebildet ist.

9. Luftfiltereinrichtung nach Anspruch 7 und 8,
**dadurch gekennzeichnet, dass**
die wenigstens eine Rampe (100) einen Scheitelbereich (102) aufweist, wobei eine Höhe der wenigstens einen Rampe (100) in dem Scheitelbereich (102) größer ist als eine maximale Höhe des wenigstens einen Rückhalteelements (82) und/oder die wenigstens eine Rampe (100) in Einführrichtung (22) gesehen zu dem Scheitelbereich (102) hin schräg ansteigend ausgebildet ist.

10. Luftfiltereinrichtung nach einem der Ansprüche 6 bis 9,
**dadurch gekennzeichnet, dass**
der, insbesondere um eine Schwenkachse schwenkbar an dem Gehäuse (12) gehaltene, Deckel (34) wenigstens ein Verschlusselement (40) aufweist, welches relativ zu einem Grundköper (38) des Deckels (34) drehbar ist, wobei in einer Schließstellung des Verschlusselements (40) wenigstens ein Halteteil (56) des Verschlusselements (40) ein korrespondierendes Halteteil (44, 46) des wenigstens einen Befestigungselements (26) oder ein Halteteil (110) des Befestigungselements (26) ein korrespondierendes Halteteil (112) des Verschlusselements (40) hintergreift.

## Claims

1. A filter element for an air filter device of a motor vehicle, comprising a frame (16) at least sectionally surrounding a filter material (18) of the filter element (10), wherein the frame (16) includes a front wall (20) extending essentially perpendicular to an insertion direction (22), in which the filter element (10) can be inserted into an accommodation space (14) of a housing (12) of the air filter device, wherein at least one fastening element, on which a cover (34) of the air filter device (26) formed for closing the accommodation space (14) can be fixed, is disposed on a front side (24) of the front wall (20),
**characterised in that**
a plate-shaped base body (60) of the front wall (20) has a narrow side (72), beyond which a holding tab (76) of the filter element (10) formed separately from the at least one fastening element (26) protrudes, wherein, by introducing the holding tab (76) into a holding recess (80) provided on sides of the housing (12) of the air filter device, the filter element (10) can be secured against movement in or opposing the insertion direction (22), wherein the at least one fastening element (26) can be inserted into a socket-shaped holding section (66) of a closure element (40) disposed on the cover (34), wherein, by rotating the closure element (40) about an axis of rotation (70), the at least one fastening element (26) encircled by the holding section (66) can be interlocked with the closure element (40) of the cover (34), or the at least one fastening element (26) has a socket-shaped holding section (110) into which a closure element (40) disposed on the cover (34) can be inserted, wherein, by rotating the closure element (40) about an axis of rotation (70), the at least one closure element (40) of the cover (34) encircled by the holding section (110) can be interlocked with the fastening element (26).

2. The filter element according to claim 1,
**characterised in that**
the at least one fastening element (26) has at least one holding part (44, 46) spaced apart from the front side (24) of the front wall (20), behind which a corresponding holding part (56) of the closure element (40) can engage for closing the accommodation space (14) by means of the cover (34).

3. The filter element according to claim 2,
**characterised in that**
the at least one holding part (44, 46) is formed as a wing projecting from a shaft (42) of the fastening element (26) transverse to the insertion direction (22) and/or the at least one holding part (44, 46) has a design extending in a ramp shape from a first end section (50) of the holding part (44, 46) towards a second end section (50) of the holding part (44, 46).

4. The filter element according to claim 1,
**characterised in that**
the closure element (26) has at least one holding part (112) spaced apart from the front side (24) of the front wall (20), behind which a corresponding holding part (114) of the fastening element (26) can engage for closing the accommodation space (14) by means of the cover (34).

5. The filter element according to any of claims 1 to 4,
**characterised in that**
the frame (16) of the filter element (10) includes two side walls (28, 30) extending from the front wall (20) in the insertion direction (22), wherein the filter element (10) has at least one support land (96) spaced apart from the front wall (20) and supporting the filter material (18) and interconnecting the side walls (28, 30).

6. An air filter device for a motor vehicle comprising a filter element (10) according to any of claims 1 to 5, wherein the filter element (10) is introduced into an accommodation space (14) formed in a housing (12) of the air filter device, wherein, when the holding tab (76) of the filter element (10) engages in a holding recess (80) provided on sides of the housing (12) of the air filter device, the accommodation space (14) can be closed by means of a cover (34) of the air filter device, which can be fixed on the at least one fastening element (26) of the filter element (10).

7. The air filter device according to claim 6,
**characterised in that**
the housing (12) of the air filter device has at least one retaining element (82) in front of the holding recess (80) in the insertion direction (22), in particular formed as a diagonally ascending ramp-shaped holding tooth as seen in the insertion direction (22).

8. The air filter device according to claim 6 or 7,
**characterised in that**
the housing has at least one ramp (100) disposed beside the holding recess (80) in the direction of longitudinal extension of the holding recess (80), wherein the at least one ramp (100) is formed to be diagonally descending from the holding recess (80) as seen in the insertion direction (22).

9. The air filter device according to claim 7 or 8,
**characterised in that**
the at least one ramp (100) has a vertex section (102), wherein a height of the at least one ramp (100) in the vertex section (102) is greater than a maximum height of the at least one retaining element (82) and/or the at least one ramp (100) is formed to be diagonally ascending towards the vertex section (102) as seen in the insertion direction (22).

10. The air filter device according to any of claims 6 to 9,
**characterised in that**
the cover (34), being in particular held on the housing (12) to be pivotable about a pivot axis, has at least one closure element (40), which can be rotated relative to a base body (38) of the cover (34), wherein, in a closing position of the closure element (40), at least one holding part (56) of the closure element (40) engages behind a corresponding holding part (44, 46) of the closure element (40), or a holding part (110) of the fastening element (26) engages behind a corresponding holding part (112) of the closure element (40).

## Revendications

1. Élément de filtre pour un dispositif de filtre à air d'un véhicule automobile, comprenant un cadre (16) qui entoure au moins à certains endroits un matériau filtrant (18) de l'élément de filtre (10), dans lequel le cadre (16) comprend une paroi frontale (20) qui s'étend essentiellement perpendiculairement à une direction d'introduction (22), dans laquelle l'élément de filtre (10) peut être introduit dans un espace de réception (14) d'un boîtier (12) du dispositif de filtration d'air, dans lequel au moins un élément de fixation (26) est disposé sur un côté frontal (24) de la paroi frontale (20), sur lequel peut être fixé un couvercle (34) du dispositif de filtration d'air conçu pour fermer l'espace de réception (14),
**caractérisé en ce qu'**
un corps de base (60) lamellaire de la paroi frontale (20) présente un côté étroit (72) sur lequel fait saillie une patte de retenue (76) de l'élément de filtre (10), agencée séparément de le au moins un élément de fixation (26), dans lequel l'élément de filtre (10) peut être bloqué contre un déplacement dans la direction d'introduction (22) ou à l'encontre de celle-ci en introduisant la patte de retenue (76) dans une cavité de retenue (80) ménagée sur le côté du boîtier (12) du dispositif de filtre à air, dans lequel le au moins un élément de fixation (26) peut être introduit dans une zone de retenue (66) en forme de manchon d'un élément de fermeture (40) disposé sur le couvercle (34), dans lequel, par rotation de l'élément de fermeture (40) autour d'un axe de rotation (70), le au moins un élément de fixation (26) entouré par la zone de retenue (66) peut être serré avec l'élément de fermeture (40) du couvercle (34), ou le au moins un élément de fixation (26) présente une zone de retenue (110) en forme de manchon, dans laquelle peut être introduit un élément de fermeture (40) disposé sur le couvercle (34), dans lequel, par rotation de l'élément de fermeture (40) autour d'un axe de rotation (70), le au moins un élément de fermeture (40) du couvercle (34) entouré par la zone de retenue (110) peut être serré avec l'élément de fixation (26).

2. Élément de filtre selon la revendication 1,
**caractérisé en ce que**
le au moins un élément de fixation (26) présente au moins une partie de retenue (44, 46) à l'écart du côté frontal (24) de la paroi frontale (20), qui peut être saisie par l'arrière par une partie de retenue (56) correspondante de l'élément de fermeture (40) permettant de fermer l'espace de réception (14) au moyen du couvercle (34).

3. Élément de filtre selon la revendication 2,
**caractérisé en ce que**
la au moins une partie de retenue (44, 46) se présente sous la forme d'une aile faisant saillie d'une tige (42) de l'élément de fixation (26) transversalement à la direction d'introduction (22) et/ou la au moins une partie de retenue (44, 46) se présente sous la forme de rampe s'étendant d'une première zone d'extrémité (48) de la partie de retenue (44, 46) à une seconde zone d'extrémité (50) de la partie de retenue (44, 46).

4. Élément de filtre selon la revendication 1,
**caractérisé en ce que**
l'élément de fermeture (40) présente au moins une partie de retenue (112) à l'écart du côté frontal (24) de la paroi frontale (20), qui peut être saisie par l'arrière par une partie de retenue (114) correspondante de l'élément de fixation (26) permettant de fermer l'espace de réception (14) au moyen du couvercle (34).

5. Élément de filtre selon l'une quelconque des revendications 1 à 4,
**caractérisé en ce que**
le cadre (16) de l'élément de filtre (10) comprend deux parois latérales (28, 30) qui s'étendent depuis la paroi frontale (20) dans la direction d'introduction (22), dans lequel l'élément de filtre (10) présente au moins un élément de liaison (96) à l'écart de la paroi frontale (20) et soutenant le matériau filtrant (18), lequel relie les parois latérales (28, 30) entre elles.

6. Dispositif de filtration à air pour un véhicule automobile, comprenant un élément de filtre (10) selon l'une quelconque des revendications 1 à 5, dans lequel l'élément de filtre (10) est placé dans l'espace de réception (14), qui est formé dans un boîtier (12) du dispositif de filtration d'air, dans lequel, lorsque la patte de retenue (76) de l'élément de filtre (10) s'introduit dans une cavité de retenue (80) pratiquée sur le côté du boîtier (12) du dispositif de filtration d'air, l'espace de réception (14) peut être fermé au moyen d'un couvercle (34) du dispositif de filtration d'air, qui peut être fixé sur le au moins un élément de fixation (26) de l'élément de filtre (10).

7. Dispositif de filtration à air selon la revendication 6,
**caractérisé en ce que**
le boîtier (12) du dispositif de filtration d'air comporte au moins un élément de retenue (82), réalisé en particulier sous la forme d'une dent de retenue en forme de rampe montant obliquement dans la direction d'introduction (22), qui est placé en amont de la cavité de retenue (80) dans la direction d'introduction (22).

8. Dispositif de filtration à air selon la revendication 6 ou 7,
**caractérisé en ce que**
le boîtier présente au moins une rampe (100) qui est disposée à côté de la cavité de retenue (80) dans la direction longitudinale de la cavité de retenue (80), dans lequel la au moins une rampe (100) étant réalisée en pente descendante obliquement à partir de la cavité de retenue (80), lorsqu'elle est observée dans la direction d'introduction (22).

9. Dispositif de filtration à air selon la revendication 7 et 8,
**caractérisé en ce que**
la au moins une rampe (100) présente une zone de sommet (102), dans lequel la hauteur de la au moins une rampe (100) dans la zone de sommet (102) est supérieure à une hauteur maximale du au moins un élément de retenue (82) et/ou la au moins une rampe (100), lorsqu'elle est observée dans le sens d'introduction (22), est réalisée en pente ascendante obliquement vers la zone de sommet (102).

10. Dispositif de filtration à air selon l'une quelconque des revendications 6 à 9, **caractérisé en ce que**
le couvercle, retenu notamment sur le boîtier (12), pouvant pivoter autour d'un axe de pivotement, comporte au moins un élément de fermeture (40) qui peut tourner par rapport à un corps de base (38) du couvercle (34), dans lequel dans une position de fermeture de l'élément de fermeture (40), au moins une partie de retenue (56) de l'élément de fermeture (40) vient se bloquer sur l'arrière d'une partie de retenue correspondante (44, 46) du au moins un élément de fixation (26) ou une partie de retenue (110) de l'élément de fixation (26) sur l'arrière d'une partie de retenue correspondante (112) de l'élément de fermeture (40).
